Europäisches Patentamt

European Patent Office

Office européen des brevets

(11) Publication number: **0 186 506 B1**

## EUROPEAN PATENT SPECIFICATION

(45) Date of publication of patent specification: **04.03.92** (51) Int. Cl.⁵: **G11B 7/00**, G11B 7/24

(21) Application number: **85309448.0**

(22) Date of filing: **23.12.85**

(54) **Optical memory medium.**

(30) Priority: **27.12.84 JP 274024/84**
**27.12.84 JP 274025/84**
**27.12.84 JP 274026/84**
**27.12.84 JP 278226/84**

(43) Date of publication of application:
**02.07.86 Bulletin 86/27**

(45) Publication of the grant of the patent:
**04.03.92 Bulletin 92/10**

(84) Designated Contracting States:
**DE FR GB NL**

(56) References cited:
**EP-A- 0 023 102**

**PATENT ABSTRACTS OF JAPAN, vol. 8, no. 147 (P-285)[1584], 10th July 1984; & JP - A - 59 45642 (RICOH K.K.) 14-03-1984**

**PATENT ABSTRACTS OF JAPAN, vol. 7, no. 70 (P-185)[1215], 23rd March 1983; & JP - A - 57 212 640 (RICOH K.K.) 27-12-1982**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Sahashi, Masashi c/o Patent Division**
**Kabushiki Kaisha Toshiba 1-1 Shibaura 1-chome**
**Minato-ku Tokyo 105(JP)**
Inventor: **Suzuki, Masayuki c/o Patent Division**
**Kabushiki Kaisha Toshiba 1-1 Shibaura 1-chome**
**Minato-ku Tokyo 105(JP)**
Inventor: **Ichihara, Katsutarou c/o Patent Division**
**Kabushiki Kaisha Toshiba 1-1 Shibaura 1-chome**
**Minato-ku Tokyo 105(JP)**
Inventor: **Ito, Haruhiko c/o Patent Division**
**Kabushiki Kaisha Toshiba 1-1 Shibaura 1-chome**
**Minato-ku Tokyo 105(JP)**
Inventor: **Takagi, Nobuyuki c/o Patent Division**
**Kabushiki Kaisha Toshiba 1-1 Shibaura 1-chome**
**Minato-ku Tokyo 105(JP)**

(74) Representative: **Freed, Arthur Woolf et al**
**MARKS & CLERK 57-60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to recording apparatus and reproducing apparatus employing a recording medium which can optically record information at high density.

As memory media of this type, in general, an optical disk for recording an information signal as a structural change and for optically reproducing the recorded signal is known. In such a conventional optical disk, a thin metal film of bismuth or tellurium is formed as a recording layer on a substrate or base body of glass or plastic. Pits are formed in the thin metal film utilizing the melt/evaporation method by a focused laser beam, thereby recording desired information. However, recording layers of such thin metal films normally have high melting points and low recording sensitivity. In addition, since recording density in such a thin metal film recording layer is limited by the diameter of the focused laser beam, the recording density cannot be improved easily.

EP-A-0 023 102 discloses a recording medium including metal specks dispersed in a holder substance.

It is an object of the present invention to provide recording apparatus and reproducing apparatus employing a recording medium which can record optical information at high sensitivity and density.

According to one aspect of the present invention, there is provided apparatus for recording information on an optical recording medium, comprising: a recording medium including specks of at least two metals and a holder substance forming bonds with said metal specks, said medium having peak values in its absorption characteristic at first and second wavelengths; said bonds being changeable by irradiation by light of third and fourth wavelengths to have an absorption characteristic different from said absorption characteristic having peak values at said first and second wavelengths; a first laser producing light at said third wavelength; a second laser producing light at said fourth wavelength; and optical control means for selectively applying light from said first and second lasers to said recording medium.

According to another aspect of the present invention, there is provided apparatus for reproducing information from an optical recording medium comprising: a first laser producing light at a first wavelength; a second laser producing light at a second wavelength; a recording medium including specks of at least two metals and a holder substance forming bonds with said metal specks, said medium having peak values in its absorption characteristic at said first and second wavelengths; said bonds being changeable by irradiation by light at third and fourth wavelengths to have an absorption characteristic different from said absorption characteristic having peak values at said first and second wavelengths; first and second photodetectors responsive to light at the first and second wavelengths respectively; and optical control means for applying light from said first and second lasers simultaneously to said recording medium and for applying light reflected from said recording medium simultaneously to said first and second photodetectors.

According to experiments conducted by the present inventors, when a holder in which metal specks having absorption characteristics of light of a specific wavelength are dispersed and which consists of a substance bonded to metal of the specks is irradiated with light, only the portion of the holder which is irradiated with light has different light absorption characteristics. This phenomenon is considered to be attributable to the fact that when the substance is irradiated with light, atoms are excited, so that the metal constituting the specks and the substance constituting the holder then have a different bond state. For example, when the holder consists of an organic compound, the bonds are dissociated and some metal atoms or ions agglomerate to form metal particle groups or clusters and light absorption characteristics are thus changed. When the holder consists of an organic or inorganic compound having atoms with low atomic values, bonds are dissociated and light absorption characteristics are canged. Therefore, when the holder is locally irradiated with light, information can be recorded. Information recorded in this manner can be reproduced by irradiating the holder with light having a wavelength corresponding to the light absorption characteristics after light irradiation for recording, and detecting transmitted or reflected light i.e. the change of light intensity.

The metal specks can be ultrafine metal particles or ultrafine metal clusters. Although the material of the metal specks is not particularly limited, the selected material preferably has a free electron (s-electron) state which influences the metal optical characteristics in accordance with the above-mentioned recording/reproduction principle. More specifically, such materials may include noble metals such as Ag, Au or Pt; alkali earth metals such as Be or Mg; or Cu having a relatively weak d-electron (local) behavior. One or more types of such metal specks can be used. Each metal speck preferably has a diameter of 10 to 1,000 Å ($10Å = 1$ nm) for the following reason. When the diameter of each metal speck is below 10 Å, an absorption peak cannot be obtained in the visible range. However, when the diameter of each metal speck exceeds 1,000 Å, absorption peak becomes weak and the S/N ratio is decreased. Reproduction then becomes difficult, and recording density is decreased since the diameter becomes closer to the size of the recording/reproducing beam. The reactive holder preferably has a volume content of metal specks of 0.01

2

to 50% for the following reason. When the volume content is below 0.01%, absorption peak becomes weak. However, when the volume content exceeds 50%, no absorption peak is obtained.

The reactive holder for dispersing and holding metal specks must be able to physically or chemically change the dispersed metal specks upon light irradiation. In particular, in order to obtain high light absorption characteristics of metal specks, which influence reproduction sensitivity, the holder material preferably has a refractive index of 1.3 or more. Examples of such materials may include thermoplastic resins such as polymethylmethacrylate, ABS resin, AS resin, cellulose resin, polyamide, polycarbonate, polyacetal, polystyrene, PVC, a vinyl acetate-vinyl chloride copolymer, polyvinylbutyral, PPO resin, or polysulfane; thermosetting resins such as unsaturated polyester, epoxy resin, polybutadiene, or polyimide; plasma polymer films obtained by mixing source gases having various functional groups such as acrylic acid, methane, acetoaldehyde, methanol, acetone, or acrylonitrile.

This invention can be more fully understood from the following detailed description when taken in conjunction with the accompanying drawings, in which:

Fig. 1 is a schematic diagram of a measurement apparatus used for characteristic evaluation of an optical memory medium;

Fig. 2 is a graph showing the transmission light spectrum distributions of three portions of a memory medium of Example 2 which are and are not irradiated with an excimer laser beam;

Fig. 3 is a schematic diagram showing an example of an apparatus for manufacturing an optical memory medium of Example 4;

Fig. 4 is a graph showing the absorption spectrum characteristics of a recording layer of a memory medium of Example 5 after recording;

Fig. 5 is a graph showing the absorption spectrum characteristics of a recording layer of a memory medium of Example 6 after recording;

Fig. 6 is a diagram showing an example of an optical recording system according to the present invention;

Fig. 7 is a diagram showing an example of an optical reproduction system according to the present invention; and

Figs. 8 and 9 are graphs showing the recording and reproducing operations, respectively.

Example 1

A quartz bath was filled with an aromatic glycidyl amine solution (trade name: GAN available from Nippon Kayaku K.K.) Ag and Au were alternately deposited on the solution surface to form an Ag/Au multilayer. A solution mixture of an epoxy resin (trade name: Epicoat 1001 available from Shell K.K.) and a polyamide (Polymide L-25 available from Sanyokasei K.K.) in methyl ethyl ketone and xylene as diluents was prepared. The recultant solution was spin-coated on a glass substrate and cured so as to prepare an optical memory medium having a recording layer in which Ag and Au specks (ultrafine particles) are dispersed in resin. The evaporation source temperatures of Ag and Au, the inert gas pressure and deposition time were changed variously, and the resin composition was also changed. Thus, three different recording layers (Examples 1 to 3) having different sizes of ultrafine particless, mixing ratios of Ag to Au, Ag and Au volume contents in resin, and film thicknesses here formed. The volume content was determined by chemical analysis, and the particle size was determined by ionizing evaporated particles or clusters and mass analyzing the mass spectrum of the clusters by a mass spectroscope.

|  | Volume Content (%) | Ag : Au | Average Particle diameter (Å) | Film Thickness (Å) |
|---|---|---|---|---|
| Example 1 | 0.5 | 1 : 10 | 50 | 4700 |
| Example 2 | 4 | 1 : 13 | 200 | 5500 |
| Example 3 | 10 | 1 : 18 | 1000 | 5200 |

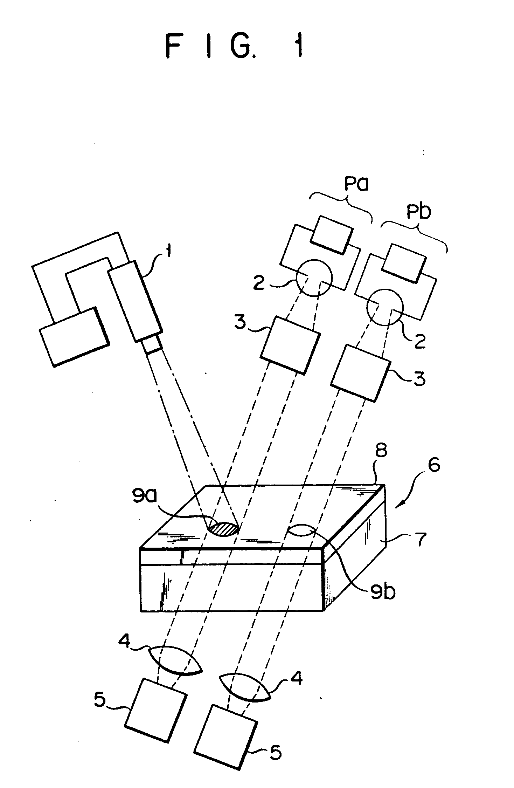

Characteristic evaluation of an optical memory medium of Example 2 using an apparatus shown in Fig. 1 will be described in detail below.

Fig. 1 shows an apparatus for measuring characteristics of an optical memory medium. Referring to Fig. 1, reference numeral 1 denotes an excimer laser (average output: 1.5 W, 100 pulse/sec, beam size: 3 $\mu$m); 2, an Xe lamp; 3, a spectroscope; 4, a focusing lens; and 5, a photodetector. The excimer lasers used were an XeF laser having a wavelength of 350 nm and a KrF laser having a wavelength of 250 nm. Xe lamp 2, spectroscope 3, focusing lens 4, and photodetector 5 described above constitute a photodetection system.

Referring to Fig. 1, reference numeral 6 denotes an optical memory medium consisting of glass substrate 7 and recording layer 8 formed thereon.

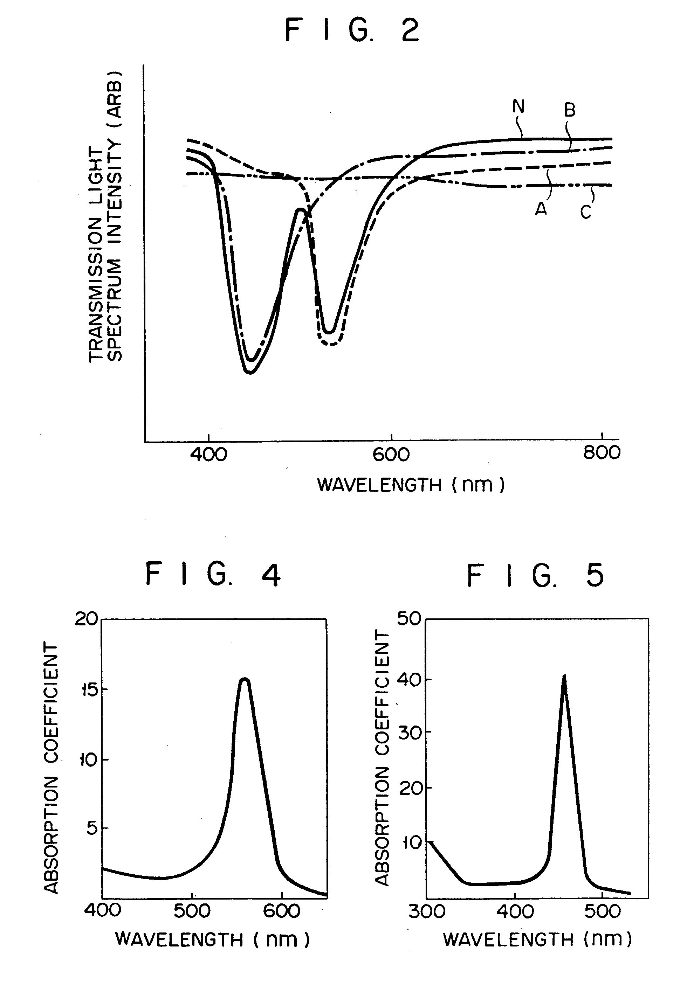

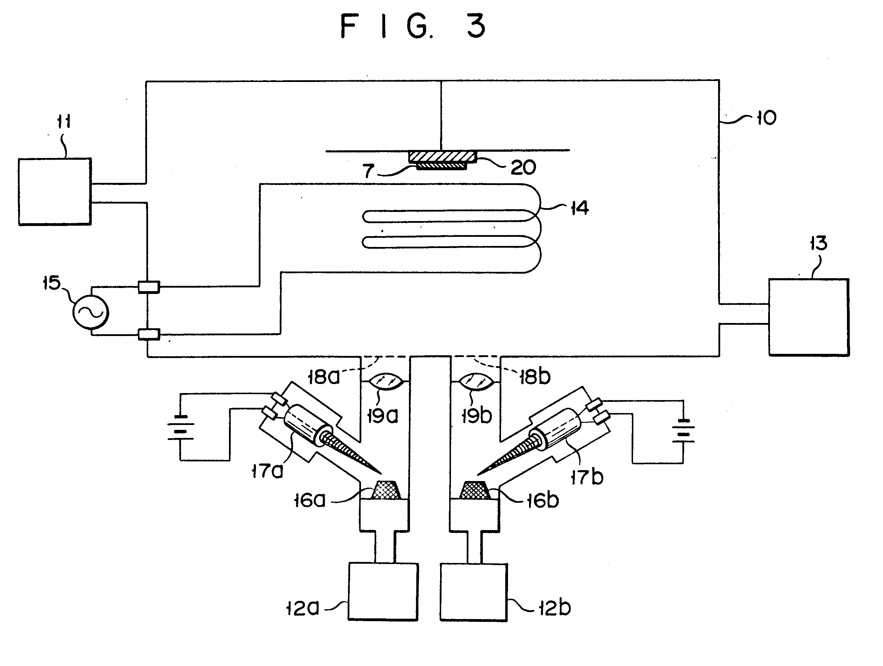

For the apparatus of the arrangement described above, three memory medium samples (A, B and C) having the same structure as in Example 2 were prepared. Excimer laser 1 was powered, and surface portion 9a of recording layer 8 of sample A was shot-irradiated with the XeF laser for one second. Subsequently, the photodetection system consisting of Xe lamp 2, spectroscope 3, lens 4 and photodetector 5 was set at position P1 in Fig. 1. Surface portion 9a of recording layer 8 was scanned with monochromatic light having a wavelength of 400 to 800 nm in a half-width of 200 nm. Photodetector 5 was used to measure the spectrum intensity distribution of the transmission light through surface portion 9a. The photodetection system was then moved to position P2 in Fig. 1. Another surface portion (laser non-irradiated portion) 9b of recording layer 8 was then irradiated with the same monochromatic light, and the spectrum intensity distribution of transmission light through surface portion 9b was similarly measured. The same operation was performed for sample B (recording was performed by only the KrF laser) and sample C (recording was performed by both the XeF and KrF lasers). The spectrum intensity distributions of the transmission light of the laser-irradiated portions were measured. Upon measurement, profiles of transmission light spectrum distributions of an optical memory medium of Example 2 shown in Fig. 2 were obtained. In Fig. 2, curve N is a transmission light spectrum distribution characteristic curve of a non-irradiated portion of a recording layer of the memory medium, curve A is a characteristic curve for a portion of the recording layer irradiated with only the XeF laser beam, curve B is a characteristic curve for a portion of the recording layer irradiated with only the KrF laser, and curve C is a characteristic curve of a portion of the recording layer irradiated with both the XeF and KrF laser beams.

As can be seen from Fig. 2, in a portion of the recording layer which is not irradiated with an excimer laser beam, a spectrum has two absorption peaks of Ag speck plasma resonance absorption (center wavelength: 430 nm) and Au speck plasma resonance absorption (center wavelength 560 nm). For a portion of the recording layer which is irradiated with only the XeF laser beam, only the plasma resonance absorbtion spectrum of Au specks is obtained. For a portion of the recording layer irradiated with only the KrF laser beam, only the plasma resonance absorption spetrum of Ag specks is obtained. For a portion of the recording layer irradiated with both the XeF and KrF laser beams, a substantialy flat transmission light spectrum is obtained. It is seen from the above results that even if a laser-irradiated portion consists of both Ag and Au specks, if the recording laser beam has a predetermined wavelength, three recording modes, i.e., display by only Ag specks, display by only Au specks, and display by both Ag and Au specks can be obtained in accordance with presence/absence of effective plasma resonance absorption of metal specks. In addition, if the reproducing beam has a predetermined wavelength (e.g., 430 nm for Ag and 560 nm for Au), recorded information in the above three modes can be respectively reproduced.

The same characteristic evaluation as for the memory medium of Example 2 was performed for optical memory media of Examples 1 and 3 using the apparatus shown in Fig. 1. As a result, as in the case of Example 2, three recording/reproduction modes were obtained.

Example 4

Example 4 illustrates a case of an optical memory medium manufactured by a dry process using an apparatus shown in Fig. 3.

Fig. 3 is a schematic diagram showing the manufacturing apparatus for an optical memory medium. Referring to Fig. 3, reference numeral 10 denotes a discharge chamber; 11, a first gas supply system; 12a and 12b, second gas supply systems; 13, an evacuation system; 14, an RF coil; 15, an RF power source; 16a, an Ag mass; 16b, an Au mass; 17a and 17b, hollow cathode guns; 18a and 18b, apertured orifices; 19a and 19b, shutters; and 20, a holding plate of an object to be treated (glass substrate 7.)

A method of manufacturing an otical memory medium using the apparatus shown in Fig. 3 will be described below.

After glass substrate 7 was fixed on holding plate 20, shutters 19a and 19b were closed. Hollow cathode guns 17 were powered to radiate an electron beam onto the surface of Ag mass 16a. At the same time, $H_2$ gas was supplied from system 12a to sputter fine Ag specks from the surface of Ag mass 16a. At the same time, an ethylene-acrylic acid gas mixture was supplied from system 11 to discharge chamber 10. Shutter 19a for mass 16a was opened, and RF power source 15 was turned on. The gas mixture of ethylene-acrylic acid and $H_2$ gas was discharged around RF coil 14 so as to guide fine Ag specks produced from the surface of mass 16a to the surface of substrate 7 together with the $H_2$ gas from system 12a. Thus, a plasma polymer film containing C, H and O and dispersed Ag specks was formed on substrate 7. Thereafter, shutter 19a was closed. Following the same procedure as for the Ag, Au specks were produced from the surface of Au mass 16b. Shutter 19b was opened to supply Au specks to the surface of substrate 7 together with $H_2$ gas supplied from system 12b so as to form a plasma polymer film containing C, H and O and having Au specks dispersed therein. The process for forming Ag and Au containing polasma polymer films was repeated twice to form a plasma polymer film containing Ag and Au specks in the amounts of 0.2 vol% and 2.3 vol%, respectively, thereby providing an optical memory medium. The mixing ratio of the gas mixture and the gas pressure of discharge chamber 11 were set appropriately to form a plasma polymer film on substrate 7.

A similar characteristic evaluation as in Example 2 was performed using the apparatus shown in Fig. 1 for an optical memory medium in Example 4. Then, it was confirmed that thee recording/reproduction modes can be obtained by dispersion of Ag and Au.

Example 5

Chloroauric acid was added to a solution of polyvinyl alcohol (polymerization degree: about 500) in methanol/water (mixing ratio: 1 : 1) and refluxed under heating for 5 minutes. After evacuation drying, a polyvinyl alcohol polymer containing 0.1% of gold was obtained. The polymer was dissolved in methanol. The resultant solution was spin-coated on a 1,000 Å thick Aℓ reflection film formed on an acrylic plate. The spin-coated film was dried to form a 0.1 $\mu$m thick recording layer to complete an optical memory medium.

The recording layer was irradiated with light of 200 $\mu$J/mm$^2$ using an Ar laser beam having a wavelength 430 nm. At this time, gold clusters having a size of about 100 Å were formed in the portion of the layer irradiated with the laser beam. When the spectrum characteristics of the recording layer after recording were measured, the results as shown in Fig. 4 were obtained.

When the reflection intensity of the recorded portion was measured, with a YAG laser having a wavelength of 560 nm equal to the absorption peak of gold clusters shown in Fig. 4, the intensity was 13% lower than that of the non-recorded portion. When the same optical memory medium was left untouched for 3 months and subjected to the same measurement, the reflecting intensity ratio of the recorded and non-recorded portions remained the same.

Example 6

A sodium hydroxide aqueous solution was added to a silver nitrate aqueous solution. After the resultant precipitate was washed with water, it was dried. The precipitate was added to a solution of polyvinyl pyrrolidone (polymerization degree: about 1,000) in methanol/water (mixing ratio: 1 : 1) and refluxed under heating for 3 minutes. The reaction product was vacuum dried to form a polyvinyl pyrrolidone polymer containing 0.05% of silver. The polymer was dissolved in ethanol and the resultant solution was spin-coated on a 1,000 Å thick Aℓ reflection film formed on an acrylic plate. The coated film was dried to form a recording layer having a thickness of 0.3 $\mu$m to provide an optical memory medium.

The recording layer of the memory medium was irradiated with light of 300 $\mu$J/mm$^2$ using a dye laser having a wavelength of 350 nm. Then, silver clusters having a size of about 50 Å were formed in the irradiated portion. When the spectrum characteristics of the recording layer after recording were examined, the graph as shown in Fig. 5 was obtained.

When the reflection intensity was examined using a dye laser having a wavelength of 460 nm equal to the absorption peak of the silver clusters shown in Fig. 5, the reflection intensity of the recorded portion was 18% lower than the non-recorded portion. After the optical memory medium was left untouched for 3 months, it was subjected to the same measurement. As a result, the reflection intensity ratio of the recorded and non-recorded portions remained the same.

Example 7

Two parts by weight of the gold-containing polymer prepared in Example 5 and 1 part by weight of the silver-containing polymer prepared in Example 6 were dissolved in ethanol. The resultant solution was spin-coated on a 1,000 Å thick Aℓ reflection film on an acrylic plate. The coated film was dried to form a recording layer having a thickness of 0.3 $\mu$m and to complete an optical memory medium.

The recording layer of the above memory medium was irradiated with light of 300 $\mu$J/mm$^2$ using a dye laser having a wavelength of 350 nm. At this time, silver clusters having a size of about 50 Å were formed in the irradiated portion. The same portion of the recording layer was irradiated with light of 200 $\mu$J/mm$^2$ using an Ar gas laser having a wavelength of 430 nm. Gold clusters having a size of about 100 Å were formed in the irradiated portion.

When the reflection intensity of the recording layer was examined using a YAG laser having a wavelength of 560 nm, it was 10% lower than that of the nonrecorded portion. When the reflection intensity of the same portion was examined using a dye laser having a wavelength of 460 nm, it was 14% lower than that of the nonrecorded portion. When this optical memory medium was left untouched for 3 months, it was subjected to the same measurements using light of wavelengths 560 nm and 460 nm. Then, the same reflection intensity ratio as that immediately after recording was obtained with light of the both wavelengths.

As described above, in the optical memory media a single metal can be dispersed as in Examples 5 and 6, or a plurality of metals can be dispersed as in other Examples. In the latter case, since a single position of the media can be recorded a plurality of times, information can be recorded at a high density and can be reproduced. Reproducing light detection can be transmitted light detection as in Examples 1 to 4 or reflected light detection as in Examples 5 to 7.

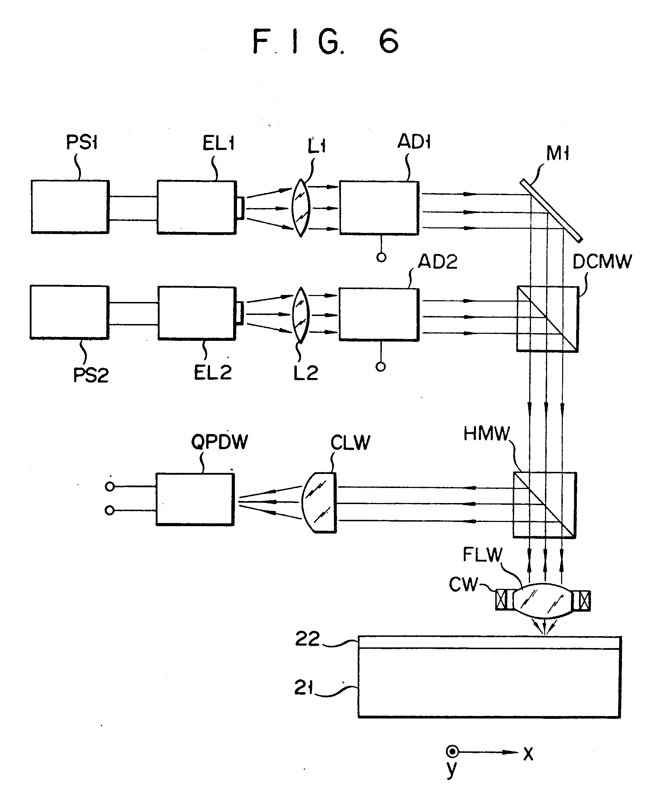

An example of a recording system and a recording system for an optical memory medium as described above will be described with reference to Figs. 6 to 9.

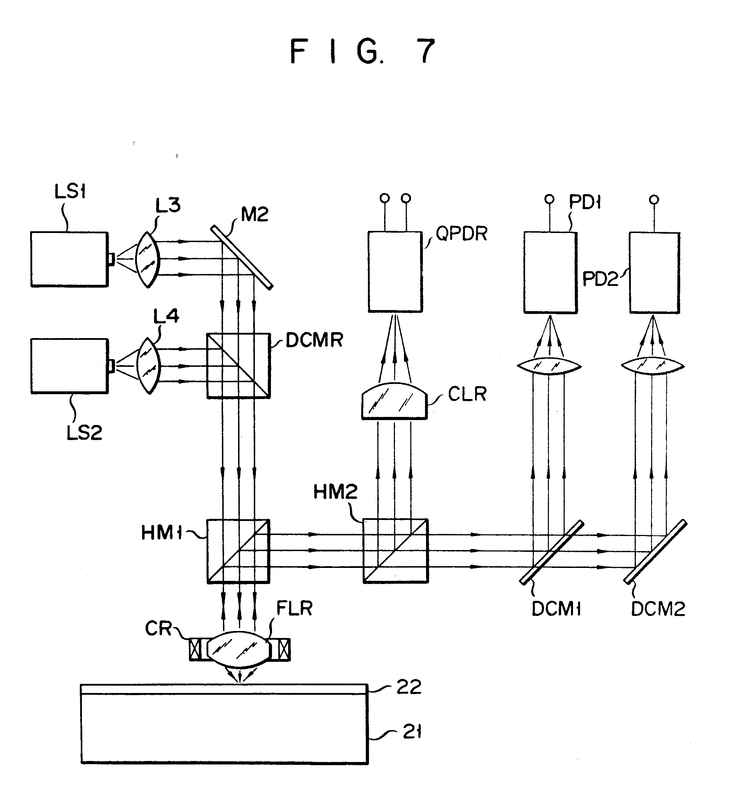

Fig. 6 schematically shows an optical recording system, and Fig. 7 schematically shows an optical reproduction system. Referring to Figs. 6 and 7, reference numeral 21 denotes an Aℓ substrate; and 22, a recording layer (recording medium) containing Ag and Au specks or clusters prepared in Example 7 and formed on substrate 21. Referring to Fig. 6, reference numerals PS1 and PS2 denote laser drive power sources; EL1, a KrF excimer laser having a wavelength of 250 nm; EL2, an XeF excimer laser having a wavelength of 350 nm; L1 and L2, lenses; AD1, an acoustic-optical (AO) modulator consisting of melted quartz; AD2, another acoustic-optical (AO) modulator consisting of $TeO_2$; M1, a total reflection mirror; DCMW, a dichroic mirror for transmitting light having a wavelength of 250 nm and reflecting light having a wavelength of 350 nm; HMW, a half mirror; CLW, a cylindrical lens; QPDW, a 4-split photodiode; FLW, an objective lens; and CW, a voice coil. Referring to Fig. 7, reference numeral LS1 denotes an Ar ion laser having a wavelength of 450 nm; LS2, a dye laser having a wavelength of 560 nm (R590 dye is excited with a secondary modulated wave of YAG laser); L3 and L4, lenses; M2, a total reflection mirror; DCMR, a dichroic mirror for transmitting light having a wavelength of 450 nm and reflecting light having a wavelength of 560 nm; HM1 and HM2, half mirrors; FLR, an objective lens; CR, a voice coil; CLR, a cylindrical lens; QPDR, a 4-split photodiode; DCM1, a dichroic mirror for transmitting light having a wavelength of 450 nm and reflecting light having a wavelength of 560 nm; DCM2, a total reflection mirror; and PD1 and PD2, pin photodiodes.

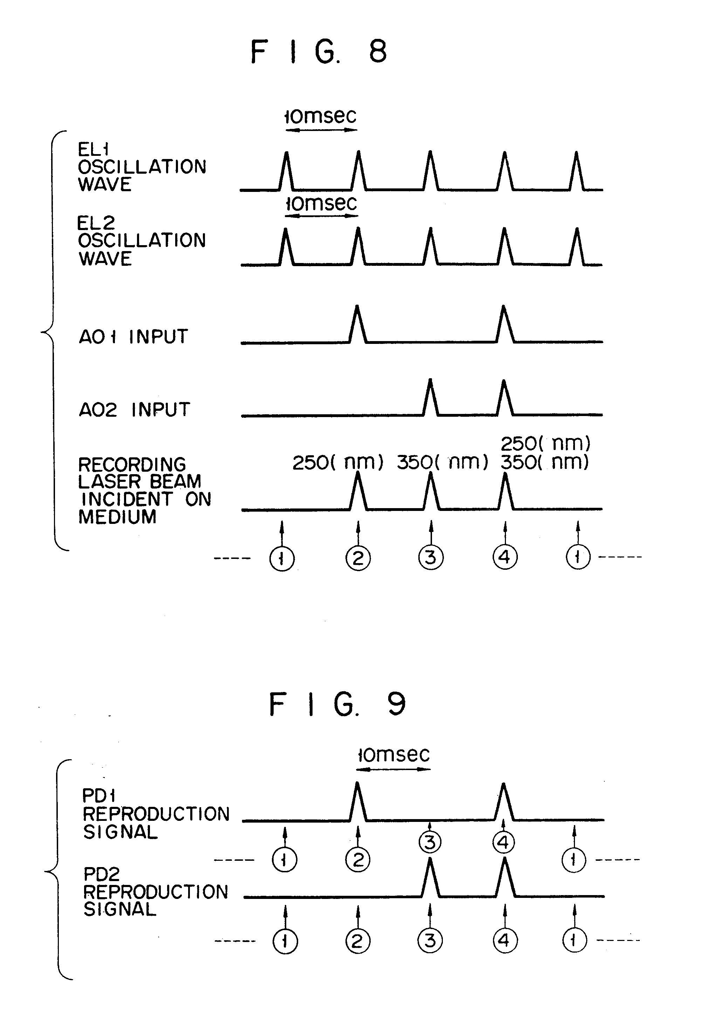

With the above arrangement, recording was performed by moving substrate 21 in X- and Y-directions on a biaxial goniostage and oscillating two excimer lasers EL1 and EL2. Input recording signals for AO modulators AD1 and AD2 are synchronized with the excimer lasers for repeated oscillation at 100 pps. As shown in Fig. 8, the recording light beam was switched in the order of (1) no laser beam radiation, (2) laser pulse of only EL2, (3) laser pulse of only EL1, (4) laser pulses of both EL1 and EL2, and (1), and so on. X-axis displacement of substrate 21 was synchronously performed using pulses of 5 $\mu$m/10 msec. When recording in the X-direction was completed, substrate 21 was moved at 5 $\mu$m/10 msec in the Y-direction and then recording in the X-direction was performed again. In order to obtain in-focus signals at different wavelengths 250 nm and 350 nm, objective lens FLW had NA = 0.2. Focusing was accomplished by reflecting part of reflected light from half mirror HMW toward cylindrical lens CLW, detecting the reflected light by photodiode QPDW, and driving voice coil CW with the obtained error signal.

After $4 \times 10^6$ recording bits were formed in a 1 cm x 1 cm area of recording layer 22 in this manner, the recording medium was assembled in an optical reproduction system as shown in Fig. 7 and the reproduction signal was detected. Reproduction was performed by focusing objective lens FLR at recording start position, and continuously oscillating two lasers LS1 and LS2 while moving substrate 21 in the X-direction. When substrate 21 was moved in the X-direction for 20 sec (1 cm), it was then moved by 5 $\mu$m in the Y-direction and then moved in the X-direction. A reflection signal from a recorded bit is transmitted through half mirror HM1 and becomes incident on cylindrical lens CLR and photodiode QPDR of the focus detection system through half mirror HM2. Focusing position control is performed by voice coil CR in accordance with an output from photodiode QPDR. The reflection signal is also incident on dichroic mirrors DCM1 and DCM2.

Fig. 9 shows waveforms of reproduced signals of photodiodes PD1 and PD2. The following output signals are obtained for recorded bit strings ①, ②, ③, and ④.

① ... PD1 and PD2 outputs are both "0" (both reproducing light beams of 450 nm and 560 nm are attenuated through recording layer 22 by plasma resonance absorption of Ag and Au clusters)

② ... PD1 output "1", PD2 output "0" (corresponds to the portion irradiated with a recording light pulse of 250 nm; plasma resonance absorption of Ag clusters does not occur and that of only Au clusters occurs; light of 450 nm is totally reflected by substrate 21 and light of 560 nm is attenuated through recording layer 22)

③ ... PD1 output "0", PD2 output "1" (absorption by only Ag is present, and absorption by Au is not present)

④ ... PD1 and PD2 outputs are both "1" (absorption by Ag and Au is not present)

According to the present invention, ultrafine metal particles having different plasma resonance absorption wavelengths are dispersed in a recording medium. The medium is irradiated with a plurality of recording light beams having different wavelengths to independently change the plasma resonance absorption states of ultrafine particles of respective metals and to form recording bits. In order to reproduce recorded signals from the medium, the medium is irradiated with a plurality of reproducing light beams corresponding to plasma resonance absorption wavelengths of the ultrafine particles of respective metals. As a result, a number of types of information corresponding to the number of types of metals of ultrafine particles can be multiple recorded in a beam size defined by the wavelength of the recording/reproducing laser. According to the present invention, an optical recording and reproducing apparatus capable of recording at higher density than conventional apparatuses can be provided. Since the recording/reproduction principle is based on the photon mode, extra recording bits are not recorded even if the power of the reproducing light beam is increased, and a reproduced signal can be obtained at high contrast.

## Claims

1. Apparatus for recording information on an optical recording medium, comprising:

a recording medium (22) including specks of at least two metals and a holder substance forming bonds with said metal specks, said medium having peak values in its absorption characteristic at first and second wavelengths;

said bonds being changeable by irradiation by light of third and fourth wavelengths to have an absorption characteristic different from said absorption characteristic having peak values at said first and second wavelengths;

a first laser (EL1) producing light at said third wavelength;

a second laser (EL2) producing light at said fourth wavelength; and

optical control means for selectively applying light from said first and second lasers to said recording medium.

2. Apparatus according to claim 1, characterized in that the optical control means comprises first and second light modulators (AD1, AD2) for modulating the light outputs of the first and second lasers (EL1, EL2) respectively and a beam combiner (DCMW) for combining the outputs of the first and second modulators (AD1, AD2) and whose light output is applied to the recording medium (22).

3. Apparatus according to claim 2, characterized in that the optical control means comprises a beam splitter (HMW) which is positioned in the light path between the beam combiner (DCMW) and the recording medium (22) and which directs part of the light output of the beam combiner (DCMW) onto a photodetector device (QPDW), and a focusing coil (CW) which focuses the light from the beam combiner (DCMW) onto the recording medium (22) in accordance with the output of the photodetector device (QPDW).

4. Apparatus for reproducing information from an optical recording medium comprising:

a first laser (LS1) producing light at a first wavelength;

a second laser (LS2) producing light at a second wavelength;

a recording medium (22) including specks of at least two metals and a holder substance forming bonds with said metal specks, said medium having peak values in its absorption characteristic at said first and second wavelengths;

said bonds being changeable by irradiation by light at third and fourth wavelengths to have an absorption characteristic different from said absorption characteristic having peak values at said first and second wavelengths;

first and second photodetectors (PD1, PD2) responsive to light at the first and second wavelengths respectively; and

optical control means for applying light from said first and second lasers (LS1, LS2) simultaneously to said recording medium (22) and for applying light reflected from said recording medium (22) simultaneously to said first and second photodetectors (PD1, PD2).

**5.** Apparatus according to claim 4, characterized in that the optical control means comprises a beam combiner (DCMR) for combining the outputs of the first and second lasers (LS1, LS2) and whose output is applied to the recording medium (22).

**6.** Apparatus according to claim 5, characterized in that the optical control means comprises a half mirror (HMI) disposed in the light path from the beam combiner (DCMR) to the recording medium (22) for transmitting light from the beam combiner (DCMR) to the recording medium (22) and for reflecting light reflected from the recording medium (22) to the first and second photodetectors (PD1, PD2).

**7.** Apparatus according to claim 6, characterized in that the optical control means comprises a beam splitter (HM2) which is positioned in the light path from the half mirror (HMI) to the photodetectors (PD1, PD2) and which directs part of the light output from the half mirror (HMI) onto a photodetector device (QPDR), and a focusing coil (CR) which focuses the light from the half mirror (HMI) onto the recording medium in accordance with the output of the photodetector device (QPDR).

**8.** Apparatus according to claim 7, wherein the beam splitter is a half mirror (HM2).

**Revendications**

**1.** Appareil d'enregistrement d'informations sur un support optique d'enregistrement, comprenant :
un support (22) d'enregistrement ayant des taches d'au moins deux métaux et une substance de support formant des liaisons avec les taches métalliques, le support ayant des valeurs de crête, dans sa caractéristique d'absorption, à une première et une seconde longueur d'onde,
les liaisons pouvant être modifiées par irradiation par de la lumière à une troisième et une quatrième longueur d'onde de manière qu'une caractéristique d'absorption différente de la caractéristique d'absorption ayant des valeurs de crête à la première et à la seconde longueur d'onde soit obtenue,
un premier laser (EL1) produisant de la lumière à la troisième longueur d'onde,
un second laser (EL2) produisant de la lumière à la quatrième longueur d'onde, et
un dispositif de commande optique destiné à appliquer sélectivement la lumière du premier et du second laser au support d'enregistrement.

**2.** Appareil selon la revendication 1, caractérisé en ce que le dispositif optique de commande comprend un premier et un second modulateur de lumière (AD1, AD2) destinés à moduler les signaux lumineux de sortie du premier et du second laser (EL1, EL2) respectivement, et un combinateur de faisceaux (DCMW) destiné à combiner les signaux de sortie du premier et du second modulateur (AD1, AD2) et dont le signal lumineux de sortie est appliqué au support d'enregistrement (22).

**3.** Appareil selon la revendication 2, caractérisé en ce que le dispositif optique de commande comprend un répartiteur de faisceaux (HMW) qui est disposé sur le trajet de la lumière entre le combinateur de faisceaux (DCMW) et le support d'enregistrement (22) et qui dirige une partie de la lumière provenant du combinateur de faisceaux (DCMW) sur un dispositif photodétecteur (QPDW), et une bobine de focalisation (CW) qui focalise la lumière du combinateur de faisceaux (DCMW) sur le support d'enregistrement (22) en fonction du signal de sortie du dispositif photodétecteur (QPDW).

**4.** Appareil de lecture d'informations sur un support optique d'enregistrement, comprenant :
un premier laser (LS1) produisant de la lumière à une première longueur d'onde,
un second laser (LS2) produisant de la lumière à une seconde longueur d'onde,
un support d'enregistrement (22) comprenant des taches d'au moins deux métaux et une substance de support formant des liaisons avec les taches métalliques, le support ayant des valeurs de crête, dans sa caractéristique d'absorption, à la première et à la seconde longueur d'onde,
les liaisons pouvant être modifiées par irradiation par de la lumière à une troisième et une quatrième longueur d'onde de manière qu'une caractéristique d'absorption différente de la caractéristique d'absorption ayant les valeurs de crête à la première et la seconde longueur d'onde soit obtenue,
un premier et un second photodétecteur (PD1, PD2) sensibles à la lumière à la première et à la seconde longueur d'onde respectivement, et
un dispositif optique de commande destiné à appliquer la lumière du premier et du second laser (LS1, LS2) simultanément au support d'enregistrement (22) et à appliquer la lumière réfléchie par le

8

EP 0 186 506 B1

support d'enregistrement (22) simultanément au premier et au second photodétecteur (PD1, PD2).

5. Appareil selon la revendication 4, caractérisé en ce que le dispositif optique de commande comprend un combinateur de faisceaux (DCMR) destiné à combiner les signaux de sortie du premier et du second laser (LS1, LS2) et dont le signal de sortie est appliqué au support d'enregistrement (22).

6. Appareil selon la revendication 5, caractérisé en ce que le dispositif optique de commande comprend un miroir semi-réfléchissant (HMI) disposé sur le trajet de la lumière provenant du combinateur de faisceaux (DCMR) et dirigé vers le support d'enregistrement (22) afin qu'il transmette la lumière du combinateur de faisceaux (DCMR) vers le support d'enregistrement (22) et qu'il réfléchisse la lumière réfléchie par le support d'enregistrement (22) vers le premier et le second photodétecteur (PD1, PD2).

7. Appareil selon la revendication 6, caractérisé en ce que le dispositif optique de commande comprend un répartiteur de faisceaux (HM2) qui est disposé sur le trajet de la lumière provenant du miroir semi-réfléchissant (HMI) et dirigé vers les photodétecteurs (PD1, PD2) et qui dirige une partie de la lumière provenant du miroir semi-réfléchissant (HMI) sur un dispositif photodétecteur (QPDR), et une bobine de focalisation (CR) qui focalise la lumière provenant du miroir semi-réfléchissant (HMI) sur le support d'enregistrement d'après le signal de sortie du dispositif photodétecteur (QPDR).

8. Appareil selon la revendication 7, dans lequel le répartiteur de faisceaux est un miroir semi-réfléchissant (HM2).

**Patentansprüche**

1. Vorrichtung zum Aufzeichnen von Information auf einem optischen Speichermedium, umfassend:
ein Speichermedium (22) mit Flecken oder Punkten aus mindestens zwei Metallen und einer mit den Metallflecken Bindungen bildenden Haltersubstanz, wobei das Medium Spitzenwerte in seiner Absorptionscharakteristik bei ersten und zweiten Wellenlängen aufweist, wobei die Bindungen durch Bestrahlung mit Licht dritter und vierter Wellenlängen änderbar sind, so daß sie eine von der Absorptionscharakteristik mit Spitzenwerten bei der ersten und zweiten Wellenlänge verschiedene Absorptionscharakteristik aufweisen,
einen ersten Laser (EL1), der Licht der dritten Wellenlänge erzeugt,
einen zweiten Laser (EL2), der Licht der vierten Wellenlänge erzeugt, und
eine optische Steuereinheit zum selektiven Aufstrahlen des Lichts von erstem und zweitem Laser auf das Speichermedium.

2. Vorrichtung nach Anspruch 1, dadurch gekennzeichnet, daß die optische Steuereinheit erste und zweite Lichtmodulatoren (AD1, AD2) zum Modulieren der Lichtausgänge von erstem bzw. zweitem Laser (EL1, EL2) und einen Strahlkombinator oder -mischer (DCMW) zum Kombinieren der Ausgänge von den ersten und zweiten Modulatoren (AD1, AD2), und dessen Lichtausgang auf das Speichermedium (22) geworfen oder aufgestrahlt wird, aufweist.

3. Vorrichtung nach Anspruch 2, dadurch gekennzeichnet, daß die optische Steuereinheit einen Strahlteiler (HMW), der im Strahlengang zwischen dem Strahlkombinator (DCMW) und dem Speichermedium (22) angeordnet ist und einen Teil des Lichtausgangs vom Strahlkombinator (DCMW) auf eine Photodetektorvorrichtung (QPDW) richtet, und eine Fokussierspule (CW) aufweist, welche das Licht vom Strahlkombinator (DCMW) entsprechend dem Ausgang von der Photodetektorvorrichtung (QPDW) auf das Speichermedium (22) fokussiert.

4. Vorrichtung zum Wiedergeben von Information von einem optischen Speichermedium, umfassend:
einen ersten Laser (LS1), der Licht einer ersten Wellenlänge erzeugt,
einen zweiten Laser (LS2), der Licht einer zweiten Wellenlänge erzeugt,
ein Speichermedium (22) mit Flecken oder Punkten aus mindestens zwei Metallen und einer mit den Metallflecken Bindungen bildenden Haltersubstanz, wobei das Medium Spitzenwerte in seiner Absorptionscharakteristik bei den ersten und zweiten Wellenlängen aufweist, wobei die Bindungen durch Bestrahlung mit Licht dritter und vierter Wellenlängen änderbar sind, so daß sie eine von der Absorptionscharakteristik mit Spitzenwerten bei der ersten und zweiten Wellenlänge verschiedene Absorptionscharakteristik aufweisen, erste und zweite Photodetektoren (PD1, PD2), die auf Licht der

9

ersten bzw. zweiten Wellenlänge ansprechen, und
eine optische Steuereinheit zum gleichzeitigen Aufstrahlen des Lichts vom ersten und zweiten Laser (LS1, LS2) auf das Speichermedium (22) und zum gleichzeitigen Aufstrahlen des vom Speichermedium (22) reflektierten Lichts auf ersten und zweiten Photodetektor (PD1, PD2).

5. Vorrichtung nach Anspruch 4, dadurch gekennzeichnet, daß die optische Steuereinheit einen Strahlkombinator oder -mischer (DCMR) zum Kombinieren der Ausgänge von erstem und zweitem Laser (LS1, LS2), und dessen Ausgang auf das Speichermedium (22) geworfen oder aufgestrahlt wird, aufweist.

6. Vorrichtung nach Anspruch 5, dadurch gekennzeichnet, daß die optische Steuereinheit einen im Strahlengang vom Strahlkombinator (DCMR) zum Speichermedium (22) angeordneten Halbspiegel (HMI) zum Übertragen des Lichts vom Strahlkombinator (DCMR) zum Speichermedium (22) und zum Reflektieren des vom Speichermedium (22) reflektierten Lichts zu erstem und zweitem Photodetektor (PD1, PD2) aufweist.

7. Vorrichtung nach Anspruch 6, dadurch gekennzeichnet, daß die optische Steuereinheit einen Strahlteiler (HM2), der im Strahlengang vom Halbspiegel (HMI) zu den Photodetektoren (PD1, PD2) angeordnet ist und ein Teil des Lichtausgangs vom Halbspiegel (HMI) auf eine Photodetektorvorrichtung (QPDR) richtet, und eine Fokussierspule (CR) aufweist, welche das Licht vom Halbspiegel (HMI) entsprechend dem Ausgang von der Photodetektorvorrichtung (QPDR) auf das Speichermedium fokussiert.

8. Vorrichtung nach Anspruch 7, dadurch gekennzeichnet, daß der Strahlteiler ein Halbspiegel (HM2) ist.

# F I G. 1

# F I G. 2

TRANSMISSION LIGHT SPECTRUM INTENSITY (ARB)

WAVELENGTH ( nm )

# F I G. 4

ABSORPTION COEFFICIENT

WAVELENGTH ( nm )

# F I G. 5

ABSORPTION COEFFICIENT

WAVELENGTH (nm)

F I G. 3

# F I G. 6

# F I G. 7

# F I G. 8

# F I G. 9